# EUROPÄISCHE PATENTSCHRIFT

(11) **EP 0 544 867 B1**
(45) Veröffentlichungstag und Bekanntmachung des Hinweises auf die Patenterteilung: **14.05.1997**
(21) Anmeldenummer: 92912337.0
(22) Anmeldetag: 10.06.1992
(51) Int. Cl.: C09C 1/00

(54) **BESCHICHTETE PLÄTTCHENFÖRMIGE PIGMENTE, DEREN HERSTELLUNG UND VERWENDUNG**
PLATELET-LIKE COATED PIGMENTS, THEIR PRODUCTION AND THEIR USE
PIGMENTS LAMELLAIRES REVETUS, LEUR PRODUCTION ET LEUR UTILISATION

(30) Priorität: 24.06.1991 DE 4120747
(43) Veröffentlichungstag der Anmeldung: 09.06.1993
(73) Patentinhaber: MERCK PATENT GmbH, D-64271 Darmstadt (DE)
(72) Erfinder: REYNDERS, Peter, D-6103 Griesheim (DE); BRÜCKNER, Hans-Dieter, D-6100 Darmstadt (DE)
(86) Internationale Anmeldenummer: EP9201295
(87) Internationale Veröffentlichungsnummer: WO9300408

(56) Entgegenhaltungen:
- EP-A- 0 142 695
- EP-A- 0 256 417
- EP-A- 0 327 739
- CHEMICAL ABSTRACTS, vol. 100, no. 22, 28. Mai 1984, Columbus, Ohio, US; abstract no. 177278f, Seite 137 ;Spalte R ;

## Beschreibung

Die Erfindung betrifft Pigmente auf der Basis plättchenförmiger Substrate, die mit einer Eisenoxid- oder eisenoxidhaltigen Mischung bedeckt sind, auf der Zinkoxid abgeschieden ist.

Derartige Pigmente sind z.B. bekannt aus EP 0,256,417. Zur Herstellung dieser Pigmente wird eine wäßrige Zinknitratlösung zu einer wäßrigen Suspension von mit Eisenoxid und Titandioxid beschichteten Muscovit-Plättchen hinzugegeben und die erhaltene Reaktionslösung wird z.B. 80 Minuten bei einem pH von z.B. 8-9 und bei einer erhöhten Temperatur von z.B. 80 °C gehalten. Die beschichteten Pigmente werden abgetrennt, getrocknet und z.B. eine Stunde lang bei 650 °C geglüht.

In CS-D-208 578 ist ein Verfahren zur Herstellung von silbernen Perlglanzpigmenten mit einer Schicht aus Titandioxid in der Rutilmodifikation auf natürlichen oder synthetischen Substraten, vorzugsweise Glimmer, beschrieben. Die Rutilstruktur wird dadurch erreicht, daß auf die Oberfläche von hydratisiertem Titandioxid Zinkoxid in Mengen von 4 - 10 Gew.%, bezogen auf das Pigment, aufgefällt wird, um den negativen Einfluß des Kaliumoxids aus dem Glimmer auf die Ausbildung der Rutilstruktur beim Kalzinieren abzuschirmen.

Derartige Pigmente weisen günstige Eigenschaften auf wie z.B. hoher Glanz, hohe Helligkeit, gute Hautverträglichkeit, antibakterielle Wirkung und hohe Absorption im UV und sie sind daher für technische Anwendungen und insbesondere auch für kosmetische Anwendungen vorgeschlagen worden. Nachteilig ist, daß herkömmliche ZnO/Mica-Pigmente zur Agglomeration neigen, was insofern problematisch ist, da plättchenförmige Pigmente nicht wie herkömmliche Pigmente unter Einwirkung hoher Scherkräfte dispergiert werden können, da dies zu einer Zerstörung der Plättchenstruktur führt. Wünschenswert wäre weiterhin die Bereitstellung von Pigmenten, die neben den hervorragenden Eigenschaften einer äußeren ZnO-Deckschicht - gute Hautverträglichkeit, antibakterielle Wirkung, günstige optische Absorptionseigenschaften - eine Körperfarbe aufweisen; herkömmliche ZnO/Mica-Pigmente weisen diese gewünschte Eigenschaftskombination nur in sehr unzureichender Weise auf.

Weiterhin sind die bisher zur Herstellung von ZnO/Mica-Pigment angewendeten Verfahren vielfach mit Nachteilen behaftet; so wird z.B. bei dem in EP 0,256,417 beschriebenen Verfahren eine Zinknitrat-Lösung benutzt, was aus Umweltschutzgründen unerwünscht ist.

Eine Aufgabe der vorliegenden Erfindung bestand in der Bereitstellung von ZnO-Pigmenten auf der Basis plättchenförmiger Substrate, welche die Nachteile herkömmlicher Pigmente nicht oder nur in geringerem Maße aufweisen. Eine weitere Aufgabe der vorliegenden Erfindung bestand in der Bereitstellung von Herstellungsverfahren, die herkömmlichen Verfahren überlegen sind. Weitere Aufgaben der vorliegenden Erfindung ergeben sich für den Fachmann aus der folgenden detaillierten Beschreibung sowie aus den Beispielen.

Es wurde nun gefunden, daß diese Aufgaben durch die erfindungsgemäßen Pigmente sowie das erfindungsgemäße Herstellungsverfahren gelöst werden.

Gegenstand der Erfindung sind somit Pigmente auf der Basis plättchenförmiger Substrate, die gegebenenfalls mit einer oder mehreren Schichten aus Metalloxiden oder Metalloxidmischungen bedeckt sind, wobei auf der Oberfläche der Substrate Zinkoxid abgeschieden ist, welches keine vollständige zusammenhängende Schicht bildet, erhältlich durch langsame Zugabe einer sauren wäßrigen Lösung von Zinkchlorid zu einer Suspension des Substrates in Wasser bei einem für die Abscheidung von Zinkhydroxid günstigen pH-Wert von 6 bis 9, wobei dieser pH-Wert durch gleichzeitige Zugabe von NaOH oder KOH im wesentlichen konstant gehalten wird, Abtrennen, Waschen, Trocknen und gegebenenfalls Glühen des erhaltenen Produkts.

Gegenstand der Erfindung ist weiterhin ein Verfahren zur Herstellung dieser Pigmente, dadurch gekennzeichnet, daß die plättchenförmigen Substrate, welche mit einer oder mehreren Schichten aus Metalloxiden oder Metalloxidmischungen bedeckt sind, in Wasser suspendiert werden, daß zu dieser Suspension eine saure wäßrige Lösung eines Zinksalzes bei einem für die Abscheidung von Zinkoxid günstigen pH-Wert von 6 bis 9 langsam zugegeben wird, wobei dieser pH-Wert durch die gleichzeitige Zugabe von NaOH oder KOH im wesentlichen konstant gehalten wird und daß das Produkt abgetrennt, gewaschen, getrocknet und gegebenenfalls geglüht wird, wobei als Zinksalz Zinkchlorid verwendet wird und der Bedeckungsgrad zwischen 0,02 und 0,95 liegt.

Gegenstand der Erfindung ist weiterhin die Verwendung der erfindungsgemäßen Pigmente zur Pigmentierung von Kunststoffen, Lacken oder Kosmetika.

Die erfindungsgemäßen Pigmente basieren auf plättchenförmigen und vorzugsweise transparenten oder semitransparenten Substraten aus z.B. Schichtsilikaten wie etwa Glimmer, Talkum, Kaolin, aus Glas oder anderen vergleichbaren Mineralien. Daneben kommen auch Metallplättchen wie z.B. Aluminiumplättchen oder plättchenförmige Metalloxide wie z.B. plättchenförmiges Eisenoxid oder Wismutoxychlorid in Betracht. Die plättchenförmigen Substrate haben typischerweise eine Dicke zwischen 0,1 und 5 µm und insbesondere zwischen 0,2 und 4,5 µm. Die Ausdehnung in den beiden anderen Dimensionen beträgt üblicherweise zwischen 1 und 250 µm und insbesondere zwischen 2 und 200 µm.

Die plättchenförmigen Substrate können direkt mit Zinkoxid beschichtet sein, wobei hierzu besonders bevorzugt transparente oder semitransparente Substrate, u.z. insbesondere Glimmer, Talkum, Kaolin und Glas, sowie plättchenförmige Metalloxide, u.z. insbesondere Eisenoxidplättchen, verwendet werden. Die plättchenförmigen Substrate können aber auch zunächst mit einer oder mehreren Schichten aus Metalloxiden oder Metalloxidmischungen wie z.B. Titanoxid, Zirkonoxid, Eisenoxid, Zinnoxid und/oder weiteren Metalloxiden bedeckt sein, ehe die nicht vollständig zusammenhängende äußere Zinkoxidschicht aufgebracht wird. Diese inneren Schichten aus Metalloxiden oder Metalloxidmischungen sind zusammenhängend ausgebildet, d.h. der Quotient aus der inneren Oberfläche der jeweiligen Schicht und der äußeren Oberfläche der vorhergehenden Schicht bzw. des plättchenförmigen Substrats beträgt praktisch 1 und jedenfalls nicht kleiner als 0,95 ist.

Die Oberfläche von mit Metalloxiden bzw. Metalloxidmischungen beschichteten Substraten kann weiterhin durch Aufbringen von polaren organischen Verbindungen wie z.B. Carbonsäuren oder durch Aufbringen anorganischer polarer Reste wie z.B. Phosphaten modifiziert sein.

Erfindungsgemäße Pigmente, welche unter der äußeren nicht-zusammenhängenden Zinkoxidschicht nicht mehr als 2 und insbesondere nur eine oder keine weitere Schicht aus einem oder mehreren Metalloxiden aufweist, sind besonders bevorzugt. Ganz besonders bevorzugt sind solche Pigmente mit einer inneren zusammenhängenden Metalloxidschicht, welche aus Titanoxid, Zirkonoxid, Eisenoxid und/oder Zinkoxid besteht.

Verfahren zur Abscheidung der genannten Metalloxide sowie weiterer Metalloxide sind z.B. beschrieben in DE 19 59 998, DE 22 15 191, DE 22 44 298, DE 25 13 331, DE 25 22 572, DE 31 37 808, DE 31 37 809, DE 31 51 343, DE 31 51 354, DE 31 51 355, DE 32 11 602 oder DE 32 35 017.

Zur Erzeugung der äußeren nicht-zusammenhängenden Zinkoxidschicht wird eine wäßrige Suspension des gegebenenfalls mit einer oder mehreren Schichten aus Metalloxiden oder Metalloxidmischungen bedeckten plättchenförmigen Substrats durch Zugabe von NaOH oder KOH auf einen für die Abscheidung von Zinkhydroxid günstigen pH-Wert von typischerweise pH = 6-9 gebracht. Die Suspension wird anschließend auf die gewünschte Reaktionstemperatur erhitzt; die Zinkhydroxid-Abscheidung wird üblicherweise bei etwas erhöhten Temperaturen zwischen 50 und 100 °C durchgeführt. Es ist aber auch möglich, daß die Umsetzung bei niedrigeren Temperaturen z.B. bei Raumtemperatur oder auch bei höheren Temperaturen, dann üblicherweise unter erhöhtem Druck, abläuft.

Anschließend wird eine wäßrige, HCl-Lösung von Zinkchlorid langsam zu der vorgelegten Suspension hinzugegeben.

Die Zugabegeschwindigkeit wird so niedrig gewählt, daß die Beschichtung nach Erreichen des gewünschten Bedeckungsgrades mit Zinkoxid abgebrochen werden kann. Dabei ist der Bedeckungsgrad Θ definiert als der Quotient aus der Summe der Flächen der nicht vollständig zusammenhängenden Zinkoxid- bzw. Zinkoxidhydratbereiche und der äußeren Oberfläche des darunter befindlichen Substrats bzw. der darunter befindlichen Metalloxid- bzw. -mischoxidschicht. Zur Ermittlung des Bedeckungsgrades kann z.B. eine rasterelektronenmikroskopische Aufnahme eines wahllos herausgegriffenen Teils der Pigmentoberfläche ausgezählt werden. Anstelle des nur relativ aufwendig zu ermittelnden Bedeckungsgrades kann vielfach zur Charakterisierung der Zinkoxidschicht auch der Quotient aus der ZnO-Masse und z.B. der Masse des Substrats verwendet werden; dieser Quotient ist vielfach zumindestens in erster Näherung proportional zum Bedeckungsgrad und kann nach entsprechender Eichung ebenfalls verwendet werden.

Der Bedeckungsgrad beträgt zwischen 0,02 und 0,95. Ganz besonders bevorzugt sind Bedeckungsgrade zwischen 0,05 und 0,8. Das ZnO kann größere, unterschiedlich geformte Kristallite wie z.B. nadelförmige Kristallite bilden (Durchmesser der Nadeln typischerweise ∼ 0,1-2 µm) oder aber es kann auch z.B. in Form von Mikrokristalliten gebildeten Punkten oder Flecken vorliegen (Durchmesser der Mikrokristallite typischerweise < 5 µm).

Geeignete Werte für die Zugabegeschwindigkeit sind natürlich abhängig von der Größe des Ansatzes; der Fachmann kann den Beispielen typische Werte entnehmen, wobei die dortigen Angaben nur beispielhaft zu verstehen sind und die Erfindung nicht beschränken sollen. Durch gleichzeitige Zugabe einer Base wird der pH der Reaktionssuspension auf dem eingangs eingestellten Wert zwischen pH = 6-9 gehalten.

Das beschichtete Substrat wird anschließend abgetrennt, gewaschen, getrocknet und gegebenenfalls geglüht.

Es wurde nun gefunden, daß die Morphologie der Zinkoxidschicht entscheidend von der Zusammensetzung der darunter befindlichen Metalloxid- bzw. -mischoxidschicht oder - bei nicht vorbeschichteten Substraten - von der Natur des Substrats beeinflußt wird. Weiterhin spielen auch Verfahrensparameter wie z.B. das Weglassen des Glühschritts, das verwendete Temperaturprogramm, die Trocken- bzw. Glühtemperatur usw. eine wichtige Rolle.

Wird die äußere Zinkoxidschicht z.B. auf einer Eisenoxid- oder eisenoxidhaltigen Mischoxidschicht abgeschieden und wird das erhaltene Pigment nach dem Abtrennen nur getrocknet oder bei relativ niedrigen Temperaturen geglüht, bilden sich kleine nadelförmige ZnO-Kristallite. Diese Kristallite sind ungeordnet auf der darunter befindlichen Schicht verteilt,und sie sind an einer oder mehreren Stellen mit der Schicht verbunden; in diesem Fall ist der Bedeckungsgrad mit ZnO definiert als der Quotient aus der Summe der Grundflächen der ZnO-Kristallite bzw. der mit der Schicht verbundenen Stellen und der äußeren Oberfläche der Schicht. Im Unterschied zu vollständig, d.h. in einer zusammenhängenden Schicht mit ZnO bedeckten Substraten, zeigen diese erfindungsgemäßen Pigmente nur eine geringe Neigung zur Agglomeration. Trotz dieser Oberflächenmorphologie weisen die Pigmente den für plättchenförmige Pigmente typischen Glanz auf, der von der unter der ZnO-Schicht befindlichen Eisenoxidschicht bzw. eisenoxidhaltigen Mischoxidschicht herrührt. Die Farbe des Pigments entspricht bei sehr geringen Bedeckungsgraden mit ZnO mehr oder weniger der Farbe der Eisenoxidschicht bzw. der eisenoxidhaltigen Mischoxidschicht und hellt sich mit steigendem Bedeckungsgrad zunehmend auf. Darüberhinaus weisen diese Pigmente die typischen Eigenschaften von Zinkoxidpigmenten wie gute Hautverträglichkeit, antibakterielle Wirkung und starke Absorption im UV auf. Erfindungsgemäße Pigmente, bei denen die ZnO-Schicht auf eine Eisenoxid- bzw. eisenoxidhaltige Mischoxidschicht aufgebracht ist und die bei relativ niedrigen Temperaturen getrocknet und geglüht worden sind bzw. nur getrocknet worden sind, zeichnen sich durch hervorragende Eigenschaften aus und sind besonders bevorzugt.

Wird dagegen das zuvor beschriebene Pigment im Anschluß an das Abtrennen von der Reaktionssuspension und nach dem Trocknen bei Temperaturen von mehr als 600 °C und insbesondere von nicht weniger als 750 °C geglüht, beobachtet man je nach dem Bedeckungsgrad mit Zinkoxid eine partielle oder vollständige Umwandlung des Zinkoxids in Zinkferrite. Die Morphologie dieser Zinkferrit-Schicht kann dabei von der ZnO-Schicht mehr oder weniger stark abweichen, wobei die Änderung der Morphologie insbesondere durch die Glühtemperatur, das Aufheiz- und Abkühlungsprogramm und auch durch den eingestellten Bedeckungsgrad mit ZnO beeinflußt werden kann. Diese Pigmente mit einer äußeren, nicht vollständig zusammenhängenden Zinkferrit-Schicht bzw. zinkferrithaltigen Schicht sind besonders bevorzugt,und sie sind Gegenstand dieser Erfindung.

Wird die Zinkoxidschicht auf eine Titandioxid- oder titandioxidhaltige Mischoxidschicht aufgebracht, bilden sich keine nadelförmigen ZnO-Kristallite, sondern das ZnO liegt in Form kleiner, mehr oder weniger flacher Punkte vor. Durch Glühen des Pigments bzw. durch Variation der Glühtemperatur oder des Temperaturprogramms kann in diesem Fall keine nadelförmige Morphologie der ZnO-Kristallite erhalten werden. Dies gilt auch, wenn die äußerste Metalloxid- bzw. mischoxidschicht Pseudobrookit enthält. Auch diese Pigmente zeigen im Vergleich zu vollständig mit ZnO beschichteten Pigmenten eine geringere Neigung zur Agglomeration. Weiterhin sind bei diesen Pigmenten die vorteilhaften Eigenschaften von plättchenförmigen Glimmerpigmenten und ZnO-Pigmenten kombiniert, so daß diese Pigmente besonders bevorzugt sind.

Weitere spezielle Ausgestaltungen der erfindungsgemäßen Pigmente sind dem Fachmann zugänglich, ohne daß es einer erfinderischen Tätigkeit bedürfte. Der Kern der vorliegenden Erfindung besteht darin, daß auf der Substratoberfläche bzw. auf der Oberfläche einer Metalloxid- bzw. -metalloxidmischung eine nicht zusammenhängende ZnO-Schicht erzeugt wird. Die Morphologie dieser ZnO-Schicht wird von dem Material der darunter befindlichen Oberfläche und von den Abscheidungs- und Glühbedingungen bestimmt und kann im Hinblick auf die jeweilige Anwendung innerhalb gewisser Grenzen variiert werden. Die Eigenschaften der erfindungsgemäßen Pigmente werden sowohl durch die ZnO-Schicht als auch durch die darunter liegende Schicht bestimmt, wodurch die Kombination interessanter Farb- und Glanzeffekte mit den günstigen Eigenschaften von ZnO-Pigmenten zugänglich wird.

Die erfindungsgemäßen Pigmente stellen somit eine erhebliche Bereichung der Palette technisch verwendbarer Pigmente dar, und ihnen kommt eine erhebliche wirtschaftliche Bedeutung zu.

Die im folgenden angegebenen Beispiele sollen die Erfindung erläutern, ohne sie zu begrenzen.

### Beispiel 1

50 g Iriodin 504 (mit Hämatit beschichteter Glimmer, Plättchendurchmesser 10-60 µm, Handelsprodukt der Fa. E. Merck, Darmstadt) werden in 1 l vollentsalztem Wasser suspendiert. Die Suspension wird auf 75 °C erhitzt und durch Zugabe einer 10%igen wäßrigen NaOH-Lösung auf einen pH-Wert von 7 eingestellt. Anschließend wird eine Lösung von 15 Gew.% ZnCl₂ in verdünnter wäßriger Salzsäure mit einer Zutropfgeschwindigkeit von etwa 3 ml/min zugegeben, während der pH der Suspension durch gleichzeitige Zugabe einer 32%igen wäßrigen NaOH-Lösung konstant auf pH = 7 gehalten wird. Die zugegebene ZnCl₂-Menge kann leicht so reguliert werden, daß ZnO₂-Bedeckungsgrade zwischen 0,02 und 0,95 erhalten werden.

Anschließend wird das beschichtete Substrat abgetrennt, gewaschen und bei 110 °C getrocknet. Die Farbe des erhaltenen Pigments variiert zwischen Dunkelrot (Θ = 0,02) und einem leichten Orange (Θ = 0,95). Das ZnO bildet kleine nadelförmige Kristallite, die an einem oder mehreren Stellen mit der darunter liegenden Oberfläche verbunden sind. Die Pigmente zeichnen sich durch eine geringe Neigung zur Agglomeration aus.

### Beispiel 2

Wie Beispiel 1, jedoch wird das beschichtete Substrat nach dem Trocknen 30 Minuten lang bei 800 °C geglüht. Wenn der Bedeckungsgrad mit ZnO größer ist als 0,05, beobachtet man im Röntgenstrahldiffraktogramm eine vollständige Umsetzung des ZnO zu ZnFe₂O₄. Diese Pigmente weisen im Vergleich zu denen aus Beispiel 1 eine stärkere Orangefärbung auf.

### Beispiel 3

Wie Beispiel 1, jedoch wird als Substrat Iriodin 525 verwendet (mit Hämatit beschichteter Glimmer, Plättchendurchmesser 5-20 µm; Handelsprodukt der Fa. E. Merck, Darmstadt)

### Beispiel 4

Wie Beispiel 1, jedoch wird als Substrat Iriodin 100 verwendet (mit Anatas beschichteter Glimmer, mittlerer Durchmesser der Substratteilchen 10-60 µm; Handelsprodukt der Fa. E. Merck, Darmstadt) und die ZnO-Abscheidung wird bei pH = 9 durchgeführt. ZnO bildet kleine, im wesentlichen flache Punkte auf der darunter liegenden Oberfläche. Die Farbe der erhaltenen Pigmente entspricht im wesentlichen der der Substrate oder ist blasser als diese.

## Patentansprüche

1. Pigmente auf der Basis plättchenförmiger Substrate, welche gegebenenfalls mit einer oder mehreren Schichten aus Metalloxiden oder Metalloxidmischungen bedeckt sind, wobei auf der Oberfläche der Substrate Zinkoxid abgeschieden ist, welches keine vollständig zusammenhängende Schicht bildet, erhältlich durch langsame Zugabe einer sauren wäßrigen Lösung von Zinkchlorid zu einer Suspension des Substrates in Wasser bei einem für die Abscheidung von Zinkhydroxid günstigen pH-Wert von 6 bis 9, wobei dieser pH-Wert durch gleichzeitige Zugabe von NaOH oder KOH im wesentlichen konstant gehalten wird, Abtrennen, Waschen, Trocknen und gegebenenfalls Glühen des erhaltenen Produkts.

2. Pigment nach Anspruch 1, worin der als Bedeckungsgrad mit Zinkoxid Θ definierte Quotient aus der Summe der Flächen der nicht vollständig zusammenhängenden Zinkoxidbereiche und der darunter liegenden, gegebenenfalls beschichteten Substratfläche zwischen 0,02 und 0,95 beträgt.

3. Pigment nach einem der Ansprüche 1 und 2, worin die Subtrate mit einer Eisenoxid- und eisenoxidhaltigen Mischoxidschicht bedeckt sind, auf der Zinkoxid in Form kleiner nadelförmiger Kristallite abgeschieden ist.

4. Pigmente nach einem der Ansprüche 1 und 2, worin die Substrate mit einer Titanoxid- oder titanoxidhaltigen Mischoxidschicht bedeckt sind, auf der Zinkoxid in Form kleiner, im wesentlichen flacher Punkte abgeschieden ist.

5. Pigmente auf der Basis plättchenförmiger Substrate, nach Anspruch 1, welche gegebenenfalls mit einer oder mehreren Schichten aus Metalloxiden oder Metalloxidmischungen bedeckt sind, enthaltend auf der Oberfläche der Substrate eine nicht vollständig zusammenhängende Zinkferrit- oder zinkferrithaltige Schicht erhältlich durch langsame Zugabe einer sauren wäßrigen Lösung von Zinkchlorid zu einer Suspension des Substrates in Wasser bei einem für die Abscheidung von Zinkhydroxid günstigen pH-Wert von 6 bis 9, wobei dieser pH-Wert durch gleichmäßige Zugabe von NaOH oder KOH im wesentlichen konstant gehalten wird, Abtrennen, Waschen, Trocknen und Glühen des erhaltenen Produkts bei Temperaturen von mehr als 650°C.

6. Verfahren zur Herstellung von Pigmenten nach Anspruch 1, indem die plättchenförmigen Substrate, welche mit einer oder mehreren Schichten aus Metalloxiden oder Metalloxidmischungen bedeckt sind, in Wasser suspendiert werden, daß zu dieser Suspension eine saure wäßrige Lösung eines Zinksalzes bei einem für die Abscheidung von Zinkhydroxid günstigen pH-Wert von 6 - 9 langsam zugegeben wird, wobei dieser pH-Wert durch gleichzeitige Zugabe von NaOH oder KOH im wesentlichen konstant gehalten wird und daß das Produkt abgetrennt, gewaschen, getrocknet und gegebenenfalls geglüht wird, dadurch gekennzeichnet, daß als Zinksalz Zinkchlorid verwendet wird und der Bedeckungsgrad zwischen 0,02 und 0,95 liegt.

7. Verfahren zur Herstellung von Pigmenten nach Anspruch 3, dadurch gekennzeichnet, daß mit einer Eisenoxidschicht bzw. mit einer eisenxidhaltigen Schicht bedeckte Substrate verwendet werden und daß wie bei Anspruch 6 verfahren wird, wobei jedoch das abgetrennte und gewaschene Produkt nur getrocknet und nicht oder nur bei niedrigen Temperaturen von weniger als 250 °C geglüht wird.

8. Verfahren zur Herstellung von Pigmenten nach Anspruch 5, dadurch gekennzeichnet, daß mit einer Eisenoxidschicht bzw. mit einer eisenoxidhaltigen Schicht bedeckte Substrate verwendet werden und daß wie bei Anspruch 6 verfahren wird, wobei das abgetrennte, gewaschene und getrocknete Produkt bei Temperaturen von mehr als 650 °C geglüht wird.

9. Verfahren zur Herstellung von Pigmenten nach Anspruch 4, dadurch gekennzeichnet, daß mit einer Titanoxidschicht bzw. mit einer titanoxidhaltigen Schicht bedeckte Substrate verwendet werden und daß wie bei Anspruch 6 verfahren wird.

10. Verwendung der Pigmente nach einem der Ansprüche 1-5 zur Pigmentierung von Kunststoffen, Lacken oder Kosmetika.

## Claims

1. Pigments based on plate-like substrates which, if desired, are covered with one or more layers comprising metal oxides or metal oxide mixtures, zinc oxide being deposited on the surface of the substrates with the formation of a not entirely continuous layer.

2. Pigment according to Claim 1, in which the quotient from the sum of the areas of the not entirely continuous zinc oxide regions and the optionally coated substrate area below, which is defined as the degree of coverage with zinc oxide θ, is between 0.02 and 0.95.

3. Pigment according to one of Claims 1 or 2, in which the substrates are covered with an iron oxide layer or a mixed oxide layer containing iron oxide, on which zinc oxide has been deposited in the form of small needle-shaped crystallites.

4. Pigments according to one of Claims 1 or 2, in which the substrates are covered with a titanium oxide layer or a mixed oxide layer containing titanium oxide, on which zinc oxide has been deposited in the form of small, essentially flat dots.

5. Pigments based on plate-like substrates which, if desired, are covered with one or more layers comprising metal oxides or metal oxide mixtures, containing on the surface of the substrates a not entirely continuous zinc ferrite layer or a layer containing zinc ferrite.

6. Process for the preparation of pigments according to Claim 1, characterised in that the plate-like substrates, which are covered with one or more layers comprising metal oxides or metal oxide mixtures, are suspended in water, in that an acid aqueous solution of zinc chloride or zinc sulfate is added to this temperature [sic] at a pH favourable for the deposition of zinc hydroxide [sic], this pH being kept substantially constant by simultaneous addition of a base, and in that the product is separated off, washed, dried and, if desired, ignited.

7. Process for the preparation of pigments according to Claim 3, characterised in that substrates covered with an iron oxide layer or a layer containing iron oxide are used and in that the procedure of Claim 6 is repeated, except that the separated and washed product is only dried and not ignited or only ignited at low temperatures of less than 250°C.

8. Process for the preparation of pigments according to Claim 5, characterised in that substrates covered with an iron oxide layer or a layer containing iron oxide are used and in that the procedure of Claim 6 is repeated, igniting the separated, washed and dried product at temperatures of more than 650°C.

9. Process for the preparation of pigments according to Claim 4, characterised in that substrates covered with a titanium oxide layer or a layer containing titanium oxide are used.

10. Use of the pigments according to one of Claims 1-5 for pigmenting plastics, coatings or cosmetics.

## Revendications

1. Pigments à base de substrats plaquettaires, lesquels sont recouverts éventuellement d'une ou plusieurs couches d'oxydes métalliques ou de mélanges d'oxydes métalliques, dans lesquels l'oxyde de zinc est déposé sur la surface des substrats, lequel ne forme aucune couche complètement cohérente, obtenue par addition lente d'une solution aqueuse acide de chlorure de zinc à une suspension du substrat dans de l'eau ayant un pH compris entre 6 et 9 favorisant la précipitation de l'hydroxyde de zinc, au cours de laquelle cette valeur de pH est maintenue essentiellement constante par addition simultanée de NaOH ou de KOH, puis par séparation, lavage, séchage et éventuellement calcination du produit obtenu.

2. Pigment selon la revendication 1, dans lequel le rapport de la somme des surfaces des zones d'oxyde de zinc non complètement cohérentes à la surface de substrat sous-jacente, éventuellement revêtue, défini comme le degré de recouvrement d'oxyde de zinc Θ, est compris entre 0,02 et 0,95.

3. Pigment selon l'une des revendications 1 et 2, dans lequel les substrats sont recouverts d'une couche d'oxyde de fer et de mélange d'oxydes contenant de l'oxyde de fer, sur laquelle l'oxyde de zinc est déposé sous forme de petites cristallites en forme d'aiguilles.

4. Pigment selon l'une des revendications 1 et 2, dans lequel les substrats sont recouverts d'une couche d'oxyde de titane ou de mélange d'oxydes contenant de l'oxyde de titane, sur laquelle l'oxyde de zinc est déposé sous forme de petits points essentiellement plats.

5. Pigments à base de substrats plaquettaires, selon la revendication 1, lesquels sont recouverts éventuellement d'une ou plusieurs couches d'oxydes métalliques ou de mélanges d'oxydes métalliques, comportant sur la surface des substrats une couche non complètement cohérente de ferrite de zinc ou contenant de la ferrite de zinc, obtenue par addition lente d'une solution aqueuse acide de chlorure de zinc à une suspension du substrat dans de l'eau ayant un pH compris entre 6 et 9 favorisant la précipitation de l'hydroxyde de zinc, au cours de laquelle cette valeur de pH est maintenue essentiellement constante par addition simultanée de NaOH ou de KOH, puis par séparation, lavage, séchage et éventuellement calcination du produit obtenu à des températures supérieures à 650°C.

6. Procédé pour la production de pigments selon la revendication 1, dans lequel les substrats plaquettaires, lesquels sont recouverts d'une ou plusieurs couches d'oxydes métalliques ou de mélanges d'oxydes métalliques, sont mis en suspension dans de l'eau, et une solution aqueuse acide d'un sel de zinc y est ajoutée lentement ayant un pH compris entre 6 et 9 favorisant la précipitation de l'hydroxyde de zinc, cette valeur de pH étant maintenue essentiellement constante par addition simultanée de NaOH ou de KOH, et le produit est séparé, lavé, séché et éventuellement calciné, caractérisé en ce que le chlorure de zinc est utilisé en tant que sel de zinc et que le degré de recouvrement se situe entre 0,02 et 0,95.

7. Procédé pour la production de pigments selon la revendication 3, caractérisé en ce que des substrats recouverts d'une couche d'oxyde de fer, respectivement d'une couche contenant de l'oxyde de fer sont utilisés et qu'il est procédé comme dans la revendication 6, mais toutefois le produit séparé et lavé est seulement séché et non calciné ou seulement calciné à des températures inférieures à 250°C.

8. Procédé pour la production de pigments selon la revendication 5, caractérisé en ce que des substrats recouverts d'une couche d'oxyde de fer, respectivement d'une couche contenant de l'oxyde de fer sont utilisés et qu'il est procédé comme dans la revendication 6, et le produit séparé lavé et séché est calciné à des températures supérieures à 650°C.

9. Procédé pour la production de pigments selon la revendication 4, caractérisé en ce que des substrats recouverts d'une couche d'oxyde de titane, respectivement d'une couche contenant de l'oxyde de titane sont utilisés et qu'il est procédé comme dans la revendication 6.

10. Utilisation des pigments selon l'une quelconque des revendications 1 à 5 pour la pigmentation de matières plastiques, de laques ou de cosmétiques.
